# EUROPÄISCHE PATENTANMELDUNG

(11) **EP 2 420 811 A1**
(43) Veröffentlichungstag der Anmeldung: **22.02.2012**
(21) Anmeldenummer: 11177733.0
(22) Anmeldetag: 17.08.2011
(51) Int. Cl.: G01M 17/02

(54) **Verfahren und Vorrichtung zur Kontrolle des Reifensitzes an Fahrzeugrädern**

(30) Priorität: 19.08.2010 DE 102010037079
(71) Anmelder: Schenck RoTec GmbH, 64293 Darmstadt (DE)
(72) Erfinder: Lipponer, Georg, 64673 Zwingenberg (DE); Steitz, Karl-Heinz, 55129 Mainz (DE)
(74) Vertreter: Haar, Lucas Heinz Jörn

(57) **Zusammenfassung**

Um den Sitz eines auf einer Felge (2) montierten schlauchlosen Reifens (3) eines Fahrzeugrades (1) zu kontrollieren wird das Fahrzeugrad (1) mit der Felge (2) zentrisch an einer drehbar gelagerten Aufnahme befestigt und wenigstens eine Umdrehung um seine Drehachse gedreht. Während der Drehung des Rades werden die Außenkonturen der radial äußeren Randbereiche der Felge (2) und der daran angrenzenden Bereiche des Reifens (3) mittels einer Abstandsmesseinrichtung abgetastet und die axialen Abstandsdifferenzen zwischen der Felge (2) und dem Reifen (3) werden erfasst und ausgewertet.

## Beschreibung

Die Erfindung betrifft ein Verfahren und eine Vorrichtung zur Kontrolle des Sitzes eines auf einer Felge montierten schlauchlosen Reifens eines Fahrzeugrades, wobei die Felge an ihrem Umfangsrand sich radial zur Drehachse erstreckende Ringwände aufweist, die mit ihren einander zugekehrten Innenseiten axiale Anlageflächen für die Reifenwülste bilden.

Bei der Serienfertigung von Fahrzeugrädern erfolgt die Montage der Reifen und Felgen häufig auf Montagestraßen mit automatischen Einrichtungen, die das Aufziehen des Reifens auf die Felge, das Aufpumpen des Reifens und das Auswuchten des fertig montierten Rades durchführen. Am Ende der Montagestraße können sich Kontrolleinrichtungen befinden, die den Höhenschlag der Reifenlauffläche und auch den Planlauf der Reifenseitenwand kontrollieren. Dennoch tritt in der Praxis immer wieder das Problem auf, dass Räder, die einwandfrei ausgewuchtet wurden und die Kontrollmessungen ohne Beanstandung durchlaufen haben, Unwuchten aufweisen, nachdem das Rad über eine nur kurze Distanz gefahren worden war. Es wird angenommen, dass solche nachträglich auftretenden Unwuchten durch ein bei Fahren unter Last bewirktes Setzen eines nicht vollständig in die Sitzposition auf der Felge gelangten Reifenwulstes verursacht wird. Es besteht daher das Bedürfnis, den Sitz der Reifenwülste auf der Felge besser zu kontrollieren.

Der Erfindung liegt daher die Aufgabe zugrunde, ein geeignetes Verfahren zur Kontrolle des Sitzes der Reifenwülste auf der Felge eines Fahrzeugrades anzugeben. Das Verfahren soll weitgehend automatisch durchführbar sein und sich für die Integration in eine Montagestraße für Fahrzeugräder eignen.

Die Aufgabe wird durch ein Verfahren mit den in Anspruch 1 angegebenen Merkmalen gelöst. Vorteilhafte Weiterbildungen des Verfahrens sind in den weiteren Ansprüche angegeben.

Das Verfahren nach der Erfindung sieht vor, dass das Fahrzeugrad mit der Felge zentrisch an einer drehbar gelagerten Aufnahme befestigt und um wenigstens eine Umdrehung um seine Drehachse gedreht wird und dass während der Drehung des Rades die Außenkonturen des radial äußeren Randbereichs einer Ringwand der Felge und des daran angrenzenden Bereichs des Reifens mittels einer Abstandsmesseinrichtung abgetastet wird und axiale Abstandsdifferenzen zwischen der Ringwand und dem Reifen erfasst und ausgewertet werden.

Überraschenderweise hat sich gezeigt, dass durch eine genaue Messung von axialen Lageabweichungen des Reifenwulstes gegenüber der Ringwand der Felge ein unvollständiger Sitz des Reifenwulstes zuverlässiger erfasst werden kann, als durch die Planlaufmessung an der Reifenseitenwand. Durch das erfindungsgemäße Kontrollverfahren ist es daher möglich, Montagefehler, die zum späteren Auftreten von Unwuchten führen können, frühzeitig zu erkennen und durch geeignete Reparaturmaßnahmen zu beseitigen.

Selbstverständlich kann die erfindungsgemäße Kontrolle des Reifensitzes gleichzeitig oder nacheinander an beiden Ringwänden der Felge durchgeführt werden.

Nach einem weiteren Vorschlag der Erfindung wird zur Abtastung eine berührungslos messende Abstandsmesseinrichtung verwendet. Besonders vorteilhaft ist die Verwendung einer Einrichtung, bei der eine radial verlaufende Laserlinie den Abtastbereich beleuchtet, wobei die Lichtreflexion von einer Hochgeschwindigkeitskamera nach dem Lichtschnittverfahren ausgewertet wird. Einrichtungen dieser Art sind bekannt und haben den Vorteil, dass mit relativ großem Abstand zum Messobjekt genaue Messungen des beleuchteten Profils durchgeführt werden können.

Nach der Erfindung kann weiterhin vorgesehen sein, dass mit Hilfe eines Drehwinkelgebers die Drehwinkelposition des Rades erfasst wird und bei der Auswertung die von der Abstandsmesseinrichtung erfassten Abstandswerte den Drehwinkeln der jeweiligen Messposition zugeordnet werden. Hierdurch ist es möglich, die Drehwinkellage einer fehlerhaften Sitzstelle des Reifenwulstes zu bestimmen und zu markieren.

Neben der Erfassung von Lagedifferenzen zwischen Ringwand der Felge und Reifen können nach einem weiteren Vorschlag der Erfindung die Messwerte der Abstandsmesseinrichtung auch zur Bestimmung des Planschlags des Rades ausgewertet werden. Weiterhin kann die erfasste Lage der Kontur des Reifens im Abtastbereich durch Vergleich mit vorbestimmten Werten zur Bestimmung des Spannungszustands des Reifens verwendet werden.

Zur Aufnahme und Drehung des Rades kann bei dem Verfahren nach der Erfindung vorteilhaft eine Unwuchtmessstation verwendet werden, die zur Bestimmung oder Kontrolle der Unwucht des Rades vorgesehen ist. Der Bauaufwand für eine separate Drehlagerung des Rades kann daher entfallen. Auch das Nachrüsten vorhandener Montageanlagen ist hierdurch besonders einfach, da lediglich die benötigten Abstandsmesseinrichtungen in eine vorhandene Unwuchtmessstation einzubauen sind.

Eine vorteilhafte Vorrichtung nach der Erfindung umfasst eine drehbar gelagerte Spindel zur zentrischen Aufnahme eines Fahrzeugrades, eine Einrichtung zur Drehung der Spindel, eine Abstandsmesseinrichtung, die in eine Messposition an dem abzutastenden Bereich des Fahrzeugrades bewegbar ist, und eine an die Abtastmesseinrichtung angeschlossene elektronische Auswerteeinrichtung.

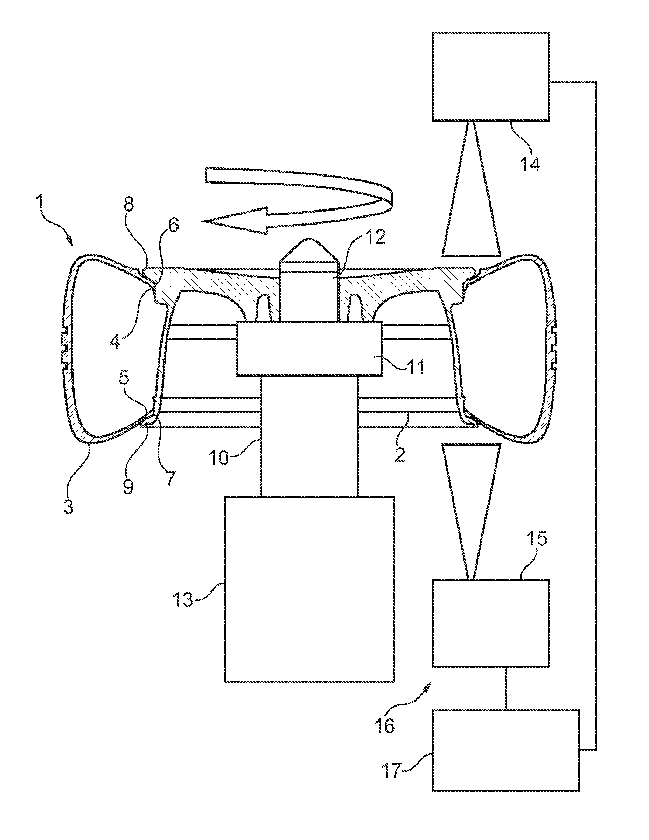

Die Erfindung wird nachfolgend anhand eines Ausführungsbeispiels näher beschrieben, das in der Zeichnung dargestellt ist. Die Zeichnung zeigt eine schematische Darstellung einer Einrichtung zur Kontrolle des Reifensitzes nach der Erfindung.

Das in der Zeichnung im Querschnitt gezeigte Fahrzeugrad 1 ist aus einer Felge 2 und einem schlauchlosen Reifen 3 zusammengesetzt. Der Reifen 3 hat zwei Reifenwülste 4, 5, die Sitzflächen 6, 7 am Außenumfang der Felge 2 umspannen. In axialer Richtung stützen sich die Reifenwülste 4, 5 an Ringwänden 8, 9 der Felge ab, die sich angrenzend an die Sitzflächen 6, 7 radial nach außen erstrecken und mit ihren den Sitzflächen 6, 7 zugekehrten Seiten Anlageflächen für die Reifenwülste 4, 5 bilden.

Das Rad 1 ist auf einer drehbaren Spindel 10 gelagert. Die Spindel 10 weist hierzu eine Aufnahme 11 mit einer ebenen radialen Anlagefläche und eine in die Mittenbohrung der Felge 2 eingreifende Spannvorrichtung 12 auf, durch welche die Felge 2 zentriergenau und drehfest auf der Spindel 10 festgespannt ist. Die Spindel 10 ist an einem Antriebsmotor 13 angeordnet und durch diesen drehend antreibbar.

In einem Abstand von der Drehachse der Spindel 10 sind auf beiden Seiten des Rades 1 Sensoren 14, 15 einer optischen Abstandsmesseinrichtung 16 angeordnet. Die Sensoren 14, 15 sind an einer Auswerteeinrichtung 17 angeschlossen, welche die Messsignale der Sensoren 14, 15 verarbeitet und durch Rechenoperationen nach vorgegebenen Kriterien auswertet. Die Sensoren 14, 15 tasten jeweils einen seitlichen Bereich des Rades 1 ab, der sich von dem radial äußeren Rand der Ringwände 8, 9 ein Stück radial nach innen und ein Stück radial nach außen erstreckt. Wenn sich das Rad 1 dreht, tasten somit die Sensoren 14, 15 einen ringförmigen Randbereich der Felge 2 und einen daran angrenzenden ringförmigen Bereich des Reifens 3 ab. Die Abstandsmesseinrichtung 16 arbeitet nach dem Lichtschnittverfahren. Die Sensoren 14, 15 beleuchten hierbei den Abtastbereich des Rades 1 mit einer im Wesentlichen radial ausgerichteten Laserlinie und beobachten mit einer elektronischen Hochgeschwindigkeitskamera die Projektion der Laserlinie auf dem Rad 1. Das erfasste Kamerabild der Linien wird von der Auswerteeinrichtung 17 mit den Methoden der Fotogrammetrie in 3-D-Koordinaten umgerechnet, aus denen die Abstandskoordinaten der abgetasteten Kontur berechnet werden kann.

Zur Durchführung einer Kontrolle des Reifensitzes wird das Rad 1 mit Hilfe der angetriebenen Spindel in Drehung versetzt und der Bereich beiderseits des Umfangsrands der Felge 2 durch Abtasten mit Hilfe der Sensoren 14, 15 vermessen. Aus den gewonnenen Abstandsmesswerten berechnet dann die Auswerteeinheit 17 die Abstandsdifferenzen zwischen den Umfangsrändern der Felge und den angrenzenden Seitenwänden des Reifens 3 und vergleicht diese mit einem vorgegebenen Grenzwert. Wird der vorgegebene Grenzwert überschritten, so wird angenommen, dass ein fehlerhafter Reifensitz vorliegt. Grenzwertüberschreitungen werden optisch oder akustisch angezeigt. Das Rad 1 kann dann zur Beseitigung des Fehlers aus der Fertigungsstraße ausgeschleust und einer Reparaturstation zugeführt werden.

Der Messlauf kann gleichzeitig dazu benutzt werden, den Seitenschlag des Rades 1 zu kontrollieren und Überschreitungen vorgegebener Grenzwerte anzuzeigen.

## Patentansprüche

1. Verfahren zur Kontrolle des Sitzes eines auf einer Felge montierten schlauchlosen Reifens eines Fahrzeugrades, wobei die Felge an ihrem Umfangsrand sich radial zur Drehachse erstreckende Ringwände aufweist, die mit ihren einander zugekehrten Innenseiten axiale Anlageflächen für die Reifenwülste bilden, **dadurch gekennzeichnet, dass** das Fahrzeugrad mit der Felge zentrisch an einer drehbar gelagerten Aufnahme befestigt und um wenigstens eine Umdrehung um seine Drehachse gedreht wird und dass während der Drehung des Rades die Außenkonturen des radial äußeren Randbereichs einer Ringwand der Felge und des daran angrenzenden Bereichs des Reifens mittels einer Abstandsmesseinrichtung abgetastet wird und axiale Abstandsdifferenzen zwischen der Ringwand und dem Reifen erfasst und ausgewertet werden.

2. Verfahren nach Anspruch 1, **dadurch gekennzeichnet, dass** zur Abtastung der Bereiche des Rades eine berührungslos messende Abstandsmesseinrichtung verwendet wird.

3. Verfahren nach Anspruch 2, **gekennzeichnet durch** die Verwendung einer Einrichtung, bei der eine radial verlaufende Laserlinie den Abtastbereich beleuchtet und die Lichtreflexion von einer Hochgeschwindigkeitskamera erfasst und nach dem Lichtschnittverfahren ausgewertet wird.

4. Verfahren nach einem der vorhergehenden Ansprüche, **dadurch gekennzeichnet, dass** mit Hilfe eines Drehwinkelgebers die Drehwinkelposition des Rades erfasst wird und den von der Abstandsmesseinrichtung erfassten Abstandswerten die Drehwinkel ihrer Messposition zugeordnet werden.

5. Verfahren nach einem der vorhergehenden Ansprüche, **dadurch gekennzeichnet, dass** die Messwerte der Abstandsmesseinrichtung zur Bestimmung des Planschlags des Rades ausgewertet werden.

6. Verfahren nach einem der vorhergehenden Ansprüche, **dadurch gekennzeichnet, dass** die erfasste Lage der Kontur des Reifens im Abtastbereich durch Vergleich mit vorbestimmten Werten zur Bestimmung des Spannungszustands des Reifens verwendet wird.

7. Verfahren nach einem der vorhergehenden Ansprüche, **dadurch gekennzeichnet, dass** zur Aufnahme und Drehung des Rades eine Unwuchtmessstation zur Bestimmung oder Kontrolle der Unwucht des Rades verwendet wird.

8. Vorrichtung zur Durchführung des Verfahrens nach einem der vorhergehenden Ansprüche, **gekennzeichnet durch** eine drehbar gelagerte Spindel (10) zur zentrischen Aufnahme eines Fahrzeugrades (1), eine Einrichtung zur Drehung der Spindel (10), eine Abstandsmesseinrichtung (16), die in eine Messposition an oder gegenüber dem abzutastenden Bereich des Fahrzeugrades bewegbar ist, und eine an die Abstandsmesseinrichtung (16) angeschlossene elektronische Auswerteeinrichtung (17).

9. Vorrichtung nach Anspruch 8 **gekennzeichnet durch** eine Unwuchtmessstation.

10. Vorrichtung nach einem der Ansprüche 8 oder 9, **gekennzeichnet durch** eine berührungslos messende Abstandsmesseinrichtung (16), mit einem eine Laserlichtquelle aufweisenden Linienprojektor, der zur Erzeugung einer radial verlaufenden, einen Abtastbereich beleuchtenden Laserlinie eingerichtet ist, einer die Lichtreflexion der Laserlinie erfassenden Hochgeschwindigkeitskamera und einer das Kamerabild nach dem Lichtschnittverfahren auswertenden Auswerteeinrichtung (17).
